(19) Europäisches Patentamt
European Patent Office
Office européen des brevets

(11) EP 1 478 671 B1

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **03706420.1**

(22) Anmeldetag: **04.02.2003**

(51) Int Cl.:
***C08F 216/12*** *(2006.01)* ***C08F 2/50*** *(2006.01)*
***C09J 133/04*** *(2006.01)*

(86) Internationale Anmeldenummer:
**PCT/EP2003/001057**

(87) Internationale Veröffentlichungsnummer:
**WO 2003/070792 (28.08.2003 Gazette 2003/35)**

(54) **UV-VERNETZBARE COPOLYMERISATE**

UV-CROSSLINKABLE COPOLYMERS

COPOLYMERISATS POUVANT ETRE RETICULES PAR ULTRAVIOLET

(84) Benannte Vertragsstaaten:
**AT BE BG CH CY CZ DE DK EE ES FI FR GB GR HU IE IT LI LU MC NL PT SE SI SK TR**

(30) Priorität: **19.02.2002 DE 10206987**

(43) Veröffentlichungstag der Anmeldung:
**24.11.2004 Patentblatt 2004/48**

(73) Patentinhaber: **BASF Aktiengesellschaft**
**67056 Ludwigshafen (DE)**

(72) Erfinder:
- **MEYER, Harald**
  **67157 Wachenheim (DE)**
- **BECKER, Heike**
  **68163 Mannheim (DE)**
- **ERHARDT, Ulrich**
  **68526 Ladenburg (DE)**
- **SCHUMACHER, Karl-Heinz**
  **67433 Neustadt (DE)**
- **JUNG, Martin**
  **68165 Mannheim (DE)**
- **HENKELMANN, Jochem**
  **68165 Mannheim (DE)**

(56) Entgegenhaltungen:
**EP-A- 0 346 788**
**US-A- 3 215 665**
**US-A- 3 265 760**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 478 671 B1

Printed by Jouve, 75001 PARIS (FR)

## Beschreibung

Die vorliegende Erfindung betrifft die Verwendung von Aceto- oder Benzophenonderivaten der allgemeinen Formel I (im Folgenden kurz "copolymerisierbare Photoinitiatoren" genannt),

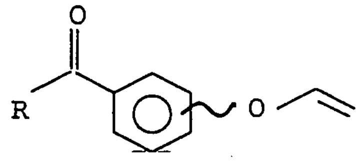

(I),

worin

R gegebenenfalls substituiertes
$C_1$- bis $C_3$-Alkyl,
$C_6$- bis $C_{10}$-Aryl oder
Aralkyl mit 6 bis 10 C-Atomen im Arylteil und 1 bis 6 C-Atomen im Alkylteil

bedeutet, als copolymerisierbare Photoinitiatoren.

Weiterhin betrifft die Erfindung Copolymerisate, welche Aceto- oder Benzophenonderivate der allgemeinen Formel I in einpolymerisierter Form enthalten, Verfahren zur Herstellung dieser Copolymerisate sowie die Verwendung dieser Copolymerisate in UV-vernetzbaren Massen.

UV-vernetzbare Klebstoffe, welche Photoinitiatoren in einpolymerisierter Form enthalten, sind beispielsweise aus der Schrift DE-A 2411169 bekannt.

Copolymerisierbare Benzophenon- oder Acetophenonderivate sind beispielsweise in den Schriften EP-A 346788 und EP-A 377199 beschrieben.

In der Schrift EP-A 246848 werden Hauthaftkleber offenbart, welche unter anderem ein vernetztes Copolymerisat enthalten. Zur Herstellung des Copolymerisats werden ethylenisch ungesättigte aromatische Ketonderivate eingesetzt, die Substituenten in breiter Variation aufweisen.

Copolymerisierbare Photoinitiatoren sollen in einfacher Weise herstellbar und gut copolymerisierbar sein und die Photoinitiatoren enthaltenden Copolymerisate sollen bei ihrer Verwendung gute anwendungstechnische Eigenschaften, insbesondere hohe Kohäsion und Adhäsion bei deren Verwendung als Klebstoff, aufweisen. Darüber hinaus sollen die die Photoinitiatoren enthaltenden Copolymerisate bei ihrer Herstellung, Lagerung und Anwendung hydrolysestabil sein.

Aufgabe der vorliegenden Erfindung war die Bereitstellung neuer copolymerisierbarer Photoinitiatoren, Copolymerisate, welche diese Photoinitiatoren in einpolymerisierter Form enthalten und welche bei ihrer Verwendung als Klebstoff verbesserte Kohäsion und Adhäsion und darüber hinaus eine erhöhte Hydrolysestabilität aufweisen.

Demgemäß wurden die eingangs definierten copolymerisierbaren Photoinitiatoren, diese enthaltende Copolymerisate sowie deren Verwendung in UV-vernetzbaren Massen gefunden.

In den erfindungsgemäß verwendeten copolymerisierbaren Photoinitiatoren der allgemeinen Formel I, bedeutet

R gegebenenfalls substituiertes
$C_1$- bis $C_3$-Alkyl, wie Methyl, Ethyl, n-Propyl oder iso-Propyl, bevorzugt Methyl,
$C_6$- bis $C_{10}$-Aryl, wie Phenyl oder Naphthyl, bevorzugt Phenyl oder
Aralkyl mit 6 bis 10 C-Atomen im Arylteil und 1 bis 6 C-Atomen im Alkylteil, beispielsweise Benzyl.

Als Substituenten kommen insbesondere Halogene, wie Fluor, Chlor und Brom, $C_1$- bis $C_6$-Alkylgruppen, wie Methyl, Ethyl, n-Propyl oder iso-Propyl, n-Butyl, iso-Butyl oder tert.-Butyl, n-Pentyl, iso-Pentyl oder tert.-Pentyl, n-Hexyl, iso-Hexyl oder tert.-Hexyl, Estergruppen, wie Methoxycarbonyl, Ethoxycarbonyl und Alkoxygruppen, wie Methoxy, Ethoxy oder n-Butoxy in Betracht. Die Reste R können bis zu 1, 2 oder 3 dieser Substituenten aufweisen.

Wesentlich ist, dass die Vinyloxygruppe in Verbindungen der Formel I in 2-, 3- oder 4-Stellung zur Carbonylgruppe stehen kann. Selbstverständlich können auch Gemische dieser Verbindungen eingesetzt werden. Bevorzugt werden jedoch copolymerisierbare Photoinitiatoren verwendet, deren Vinyloxygruppe in 2- oder 4-Stellung und insbesondere in 4-Stellung zur Carbonylgruppe steht.

Als copolymerisierbare Photoinitiatoren finden beispielsweise 2-Vinyloxyacetophenon, 3-Vinyloxyacetophenon, 4-Vinyloxyacetophenon, 2-Vinyloxybenzophenon, 3-Vinyloxybenzophenon oder 4-Vinyloxybenzophenon, bevorzugt 2-Vinyloxyacetophenon, 4-Vinyloxyacetophenon, 2-Vinyloxybenzophenon oder 4-Vinyloxybenzophenon und insbesondere 4-Vinyloxyacetophenon oder 4-Vinyloxybenzophenon, allein oder im Gemisch, Verwendung.

Die Herstellung der copolymerisierbaren Photoinitiatoren ist dem Fachmann bekannt und erfolgt beispielsweise durch metallsalzkatalysierte Umsetzung der entsprechenden Phenolverbindungen II, in denen R die oben definierte Bedeutung hat, mit Acetylen:

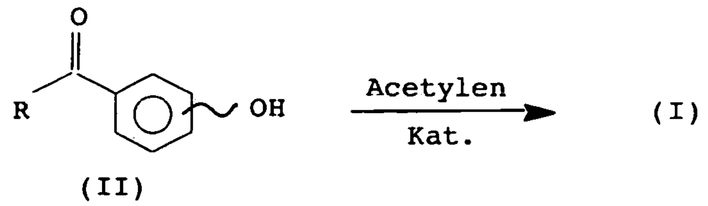


Die erfindungsgemäßen Copolymerisate werden durch radikalische Polymerisation einer Mischung von ethylenisch ungesättigten Verbindungen (Monomere) erhalten, welche die copolymerisierbaren Photoinitiatoren in einer Gesamtmenge von 0,01 bis 10 Gew.-%, bevorzugt von 0,05 bis 5 Gew.-% und insbesondere bevorzugt von 0,1 bis 2 Gew.-%, jeweils bezogen auf die Gesamtmonomerenmenge, enthält. Entsprechend sind die copolymerisierbaren Photoinitiatoren in den Copolymerisaten in Mengen von 0,01 bis 10 Gew.-%, bevorzugt von 0,05 bis 5 Gew.-% und insbesondere bevorzugt von 0,1 bis 2 Gew.-% einpolymerisiert. An dieser Stelle sei festgehalten, dass die in der Beschreibung genannten prozentualen Mengengehalte der im Copolymerisat einpolymerisierten ethylenisch ungesättigten copolymerisierbaren Photoinitiatoren sowie der anderen Monomeren generell den Mengengehalten dieser Komponenten in der zu polymerisierenden Monomerenmischung entsprechen soll und umgekehrt.

Die Copolymerisate enthalten neben den vorgenannten Photoinitiatoren als Hauptmonomere im allgemeinen überwiegende Anteile, meist 50 bis 99,99 Gew.-%, vorzugsweise 70 bis 97,5 Gew.-% Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, einpolymerisiert. Als Comonomere kommen insbesondere in einfacher Weise radikalisch polymerisierbare Monomere in Betracht, wie beispielsweise Ethylen, vinylaromatische Monomere, wie Styrol, $\alpha$-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Nitrile $\alpha,\beta$-monoethylenisch ungesättigter Carbonsäuren, wie Acrylnitril sowie $C_{4-8}$-konjugierte Diene, wie 1,3-Butadien und Isopren.

Mit besonderem Vorteil enthalten die Copolymerisate zusätzlich zu den vorgenannten Monomeren 0,1 bis 15 Gew.-%, vorzugsweise 0,5 bis 8 Gew.-% an 3 bis 6 C-Atomen aufweisenden $\alpha,\beta$-monoethylenisch ungesättigten Mono- und Dicarbonsäuren, deren Amide und/oder deren Anhydride, wie insbesondere Acrylsäure, Methacrylsäure, Maleinsäure, Fumarsäure und Itaconsäure, Acrylamid und Methacrylamid, Maleinsäureanhydrid, ferner Vinylsulfonsäure, 2-Acryl-amido-2-methylpropansulfonsäure, Styrolsulfonsäure und deren wasserlösliche Salze sowie N-Vinylpyrrolidon und N-Vinylimidazol.

Die Copolymerisate können neben den bereits erwähnten Monomeren zusätzlich weitere Comonomere einpolymerisiert enthalten, beispielsweise solche, die üblicherweise die innere Festigkeit der Verfilmungen der Copolymerisate erhöhen. Diese ethylenisch ungesättigten Monomeren weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden $\alpha,\beta$-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, häufig in Mengen von 0,1 bis 10 Gew.-% einpolymerisiert.

Die Art und Weise, in der die monomeren Komponenten im Verlauf der radikalischen Polymerisation dem Polymerisationsgefäß zugegeben wird, ist dem Durchschnittsfachmann bekannt. Diese können sowohl vollständig in das Polymerisationsgefäß vorgelegt, als auch nach Maßgabe ihres Verbrauchs im Verlauf der radikalischen Polymerisation kontinuierlich oder stufenweise zugesetzt werden. Im einzelnen hängt.dies von der chemischen Natur des Initiatorsystems als auch von der Polymersiationstemperatur ab. Vorzugsweise wird ein kleiner Teil der monomeren Komponenten vorgelegt und der Rest nach Maßgabe des Verbrauchs der Polymerisationszone zugeführt. Selbstverständlich ist es auch möglich, dass im Verlauf der Polymerisation die Zusammensetzung des zu polymerisierenden Monomerengemisches verändert wird. Diese Verfahrens-varianten sind dem Fachmann bekannt. So kann beispielsweise in der sogenannten Stufenfahrweise dem Polymerisationsgefäß nach Maßgabe des Verbrauchs zuerst eine Monomerenmischung 1 und daran anschließend eine Monomerenmischung 2 mit einer anderen Monomerenzusammensetzung zugeführt werden, während in der sogenannten Gradientenfahrweise die Zusammensetzung der dem Polymerisationsgefäß.zugeführten Monomerenmischung kontinuierlich verändert wird. Häufig erfolgt die Polymerisation unter Inertgasatmosphäre, beispielsweise unter Stickstoff oder Argon.

Die erfindungsgemäßen Copolymerisate haben üblicherweise K-Werte von 10 bis 150 und oft von 15 bis 100. Die Bestimmung der K-Werte erfolgt üblicherweise bei 25 °C nach DIN ISO 1628-1 mit einer 1 gew.-%igen Lösung der Copolymerisate in Tetrahydrofuran. Vorzugsweise beträgt der K-Wert 25 bis 55, wenn die Copolymerisate als Schmelzhaftkleber verwendet werden sollen. Sollen die Copolymerisate in UV-härtbaren Massen zum Beschichten von mineralischen Oberflächen verwendet werden, so betragen ihre K-Werte vorzugsweise 60 bis 100. Copolymerisate, die für Lacke verwendet werden sollen, haben vorzugsweise K-Werte von 15 bis 85.

Die erfindungsgemäßen Copolymerisate können Glasübergangstemperaturen von -70 bis +150 °C aufweisen. Abhängig vom Einsatzzweck werden häufig Copolymerisate benötigt, deren Glasübergangstemperaturen innerhalb bestimmter Bereiche liegen. Durch geeignete Auswahl der zu polymerisierenden ethylenisch ungesättigten Monomeren ist es dem Fachmann möglich, gezielt Copolymerisate herzustellen, deren Glasübergangstemperaturen im gewünschten Bereich liegen. Sollen beispielsweise die erfindungsgemäßen Copolymerisate als Haftkleber eingesetzt werden, wird die Zusammensetzung des zu polymerisierenden Monomerengemisches so gewählt, dass die erzeugten Copolymerisate Glasübergangstemperaturen < 0 °C, häufig ≤ -5 °C und oft ≤ -10 °C aufweisen. Sollen die Copolymerisate jedoch als UV-härtbare Bindemittel in Beschichtungsformulierungen Verwendung finden, wird die Zusammensetzung des zu polymerisierenden Monomerengemisches so gewählt, dass die erzeugten Copolymerisate Glasübergangstemperaturen von -40 bis +150 °C, häufig von 0 bis +100 °C und oft von +20 bis +80 °C aufweisen.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd: 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots\ x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989.

Die neuen Copolymerisate können durch Copolymerisation der monomeren Komponenten unter Verwendung der üblichen Polymerisationsinitiatoren sowie gegebenenfalls von Reglern hergestellt werden,
wobei man bei den üblichen Temperaturen in Substanz, in Emulsion, beispielsweise in Wasser oder in geeigneten organischen Medien, oder in Lösung polymerisiert. Vorzugsweise werden die neuen Copolymerisate durch Polymerisation der monomeren Komponenten in organischen Lösungsmitteln, insbesondere in Lösungsmitteln mit einem Siedebereich von 50 bis 150 °C, vorzugsweise 60 bis 120 °C unter Verwendung der üblichen Menge an Polymerisationsinitiatoren, welche im allgemeinen bei 0,01 bis 10 Gew.-%, insbesondere 0,1 bis 4 Gew.-%, jeweils bezogen auf das Gesamtgewicht der monomeren Komponenten, liegt, hergestellt. Als organische Lösungsmittel kommen insbesondere

Alkohole, wie Methanol, Ethanol, n- und iso-Propanol, n- und iso-Butanol, cyclische Ether, wie beispielsweise Tetrahydrofuran sowie Kohlenwasserstoffe, wie Toluol und Benzine eines Siedebereichs von 60 bis 120 °C in Frage. Ferner können Ketone, wie Aceton, Methylethylketon, Methylisobutylketon und Ester, wie beispielsweise Essigsäureethylester sowie Gemische von Lösungsmitteln der genannten Art eingesetzt werden, wobei Gemische, die iso-Butanol und/oder Methylethylketon in Mengen ≥ 70 Gew.-%, besonders ≥ 80 Gew.-% und insbesondere ≥ 90 Gew.-%, bezogen auf das eingesetzte Lösungsmittelgemisch, enthalten, vorgezogen werden.

Die Art und Weise, in der das Lösungsmittel oder Lösungsmittelgemisch im Verlauf der radikalischen Polymerisation dem Polymerisationsgefäß zugegeben wird, ist dem Durchschnittsfachmann bekannt. Es kann sowohl vollständig in das Polymerisationsgefäß vorgelegt, als auch im Verlauf der radikalischen Polymerisation kontinuierlich oder stufenweise eingesetzt werden. Auch kann das Lösungsmittel im Gemisch mit den Monomeren und/oder dem Initiator eingesetzt werden. Vorzugsweise wird ein Großteil des Lösungsmittels vorgelegt und der Rest gemeinsam mit den zu polymerisierenden Monomeren und/oder Initiatoren der Polymerisationszone zugeführt.

Als Polymerisationsinitiatoren kommen bei der Lösungspolymerisation beispielsweise Azoverbindungen, wie 2,2'-Azobisisobutyronitril, 2,2'-Azobis-2-methylbutyronitril, Diacylperoxide, wie Dibenzoylperoxid, Dilauroylperoxid, Didecanoylperoxid und Diisononanoylperoxid, Alkylperester, wie tert.-Butylperpivalat, tert.-Butylper-2-ethylhexanoat, tert.-Butylpermaleinat, tert.-Butylperisononanoat, tert.-Butylperneodecanoat und tert.-Butylperbenzoat, Dialkylperoxide, wie Dicumylperoxid oder Di-tert.-butylperoxid, Peroxidicarbonate, wie Dimyristylperoxidicarbonat, Dicetylperoxidicarbonat, Bis(4-tert.-butylcyclohexyl)peroxidicarbonat, Dicyclohexylperoxidicarbonat, Bis(2-ethylhexyl)peroxidicarbonat, Hydroperoxide, wie tert.-Butylhydroperoxid, Cumolhydroperoxid allein oder im Gemisch in Frage. Bei der wässrigen Emulsionspolymerisation können die üblichen Initiatoren, wie beispielsweise Natrium-, Kalium- und Ammoniumperoxodisulfat oder aber auch dem Fachmann bekannte Redox-Systeme verwendet werden.

Die Art und Weise, in der der Initiator im Verlauf der radikalischen Polymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen Polymerisation kontinuierlich oder stufenweise eingesetzt werden. Im einzelnen hängt dies von der chemischen Natur des Initiatorsystems als auch von der Polymersiationstemperatur ab. Vorzugsweise wird ein kleiner Teil vorgelegt und der Rest nach Maßgabe des Verbrauchs der Polymerisationszone zugeführt. Häufig ist es günstig, wenn die Polymerisationsreaktion so geführt wird, dass zuerst ≤ 50 Gew.-%, oft ≤ 45 Gew.-% oder ≤ 40 Gew.-% des Initiators kontinuierlich über eine längere Zeitperiode und daran anschließend > 50 Gew.-%, oft ≥ 55 Gew.-% oder ≥ 60 Gew.-% des Initiators kontinuierlich über eine kürzere Zeitperiode dem Polymerisationsgefäß zugeführt werden.

Die Polymerisation kann in an sich üblicher Weise durchgeführt werden in einer Polymerisationsapparatur, die im allgemeinen mit einem Rührer, mehreren Zulaufgefäßen bzw. -leitungen, Rückflußkühler und Heizungs- und Kühleinrichtungen versehen ist und für das Arbeiten unter Inertgasatmosphäre und Drücken oberhalb bzw. unterhalb des Atmosphärendruckes ausgerüstet ist.

Nach der Polymerisation in Lösung können die Lösungsmittel, gegebenenfalls unter vermindertem Druck abgetrennt werden, wobei man bei erhöhten Temperaturen von bis zu 150 °C arbeitet. Die neuen Copolymerisate können dann im lösungsmittelarmen oder lösungsmittelfreien Zustand, d.h. als Schmelzen, als Klebstoffe, vorzugsweise Haftklebstoffe und insbesondere Schmelzhaftklebstoffe oder als UV-härtbare Bindemittel in Beschichtungsformulierungen, wie beispielsweise Beschichtungsmittel zur Beschichtung von mineralischen Oberflächen oder als Lacke eingesetzt werden. In manchen Fällen kann es auch von Vorteil sein, die neuen Copolymerisate durch Copolymerisation in Substanz, d.h. ohne Mitwirkung eines Lösungsmittels herzustellen, wobei man chargenweise oder auch kontinuierlich, beispielsweise nach den Angaben der US-A 4,042,768, arbeiten kann.

Soweit man die neuen Copolymerisate in Form von Lösungen, beispielsweise als UV-härtbare Bindemittel in Beschichtungsformulierungen, wie beispielsweise Beschichtungsmittel zur Beschichtung von mineralischen Oberflächen oder als Lacke einsetzt, enthalten die Copolymerisatlösungen üblicherweise 1 bis 900 Gew.-Teile, bevorzugt 10 bis 100 Gew.-Teile und insbesondere bevorzugt 20 bis 40 Gew.-Teile Lösungsmittel pro 100 Gew.-Teile Copolymerisat. Häufig lassen sich für diese Zwecke die aus der Lösungspolymerisation erhältlichen Copolymerisatlösungen direkt einsetzen, oder daraus durch Verdünnen bzw. Aufkonzentrieren in einfacher Weise herstellen.

In manchen Fällen, beispielsweise wenn die neuen Copolymerisate durch radikalisch initiierte wässrige Emulsionspolymerisation hergestellt werden, können auch übliche Regler in den üblichen Mengen, beispielsweise in Mengen von 0,1 bis 10 Gew.-Teilen oder 0,5 bis 5 Gew.-Teilen pro 100 Gew.-Teilen der zur Polymerisation eingesetzten Monomeren mitverwendet werden. Derartige Regler werden zur Molekulargewichtsregulierung der Copolymerisate eingesetzt und sind dem Fachmann bekannt. Häufig werden Mercaptoverbindungen, wie 2-Mercaptoethanol, 3-Mercaptopropionsäuremethylester, 3-Mercaptopropyltrimethoxysilan, 3-Mercaptopropylmethyl-dimethoxysilan, 3-Mercaptopropionsäure, n- oder tert.-Dedecylmercaptan, 1,6-Dimercaptohexan, 1,9-Dimercaptononan, Kohlenwasserstoffe, wie Cumol, Alkohole, wie beispielsweise iso-Propanol und iso-Butanol oder halogenierte Kohlenwasserstoffe, wie Tetrachlorkohlenstoff, Tetrabromkohlenstoff, Chloroform oder Bromoform, Ether, wie Tetrahydrofuran und Dioxan als Regler verwendet.

Werden die neuen Copolymerisate durch radikalisch initiierte wässrige Emulsionspolymerisation hergestellt, so findet die Polymerisation üblicherweise in Anwesenheit von Dispergiermitteln statt. Als Dispergiermittel können dem Fachmann geläufige Schutzkolloide und/oder Emulgatoren, beispielsweise nichtionische sowie anionische oder kationische Emulgatoren eingesetzt werden. Bevorzugt werden nichtionische und anionische Emulgatoren eingesetzt. Die Dispergiermittelmenge macht üblicherweise bis zu 30 Gew.-Teile, vorzugsweise 0,5 bis 10 Gew.-Teile und besonders bevorzugt 1 bis 6 Gew.-Teile, bezogen auf 100 Gew.-Teile der zu polymerisierenden Monomere, aus.

Häufig werden nach Beendigung der Copolymerisation nicht umgesetzte Monomere aus dem Reaktionsgemisch entfernt. Bei der Lösungspolymerisation erfolgt dies gleichzeitig mit dem Entfernen des Lösungsmittels bei vermindertem Druck. Um dabei die Effektivität, insbesondere im Betriebsmaßstab zu erhöhen, wird das Copolymerisat am Ende der Lösungsmittelabtrennung mit Wasserdampf gestrippt. Diese Wasserdampfstrippung erfolgt häufig ebenfalls am Ende der radikalisch initiierten Emulsionspolymerisation, gegebenenfalls nach einem dazwischengeschalteten Nachpolymerisationsschritt, wie er dem Fachmann beispielsweise aus den Schriften WO 95/33775, EP-A 767180 oder DE-A 19743759 bekannt ist. Von Bedeutung ist, dass die erfindungsgemäßen Photoinitiatoren, in copolymerisierter Form, im Vergleich zu den aus dem Stand der Technik bekannten copolymerisierbaren Photoinitiatoren, eine verbesserte Hydrolysestabilität gegenüber Wasser oder anderen protischen organischen Lösungsmitteln, wie beispielsweise iso-Propanol oder iso-Butanol, aufweisen.

Beim Einsatz der neuen Copolymerisate können diese in an sich üblicher Weise modifiziert und/oder konfektioniert und beispielsweise als Schmelzhaftkleber verwendet werden. So können z.B. übliche klebrigmachende Harze, beispielsweise Kohlenwasserstoffharze, modifizierte natürliche oder chemisch modifizierte Kolophoniumharze, welche zum überwiegenden Teil aus Abietinsäure oder Abietinsäurederivaten bestehen, Cumaron-Inden-Harze, Terpenphenolharze, Aldehydharze oder Homopolymerisate, wie Poly-2-ethylhexylacrylat oder Poly-$\alpha$-methylstyrol, ferner Weichmacher, beispielsweise auf Basis von Mono-, Di- oder Polyesterverbindungen, perchlorierten Kohlenwasserstoffen oder Paraffinölen, Farbstoffe und Pigmente oder Stabilisatoren oder kautschukelastische Stoffe, wie Natur- oder Synthesekautschuk, Polyvinylether sowie ferner Polybutadienöle in Mengen von 0,1 bis 50 Gew.-%, bezogen auf die Gesamtmasse, zugesetzt werden.

Zur Modifizierung kommen auch ein- oder mehrfach olefinisch ungesättigte höhermolekulare Verbindungen in Betracht, wie beispielsweise mit Acrylsäure veresterte Polyesterole und Polyetherole, wie die Acrylate von Tripropylenglykol, Tetraethylenglykol oder anderen Polyethylenglykolen. Geeignet sind außerdem Diacrylate und Dimethacrylate von Polytetrahydrofuran mit Molekulargewichten von meist 250 bis 2000 (Zahlenmittel). Derartige, mindestens diolefinisch ungesättigte Verbindungen können mit Vorteil in Mengen von 0,1 bis 10 Gew.-Teilen, bezogen auf 100 Gew.-Teile Copolymerisat, eingesetzt werden, wobei diolefinisch ungesättigte Verbindungen dieser Art mit einem Molekulargewicht von mindestens 500 (Zahlenmittel) von besonderem Interesse sind.

Die neuen Copolymerisate eignen sich insbesondere als Schmelzen, Lösungen oder in Form wässriger Dispersionen zur Herstellung von Überzügen, Beschichtungen und Imprägnierungen, insbesondere von Haftklebern, Haftklebefolien und Haftklebeetiketten sowie Prägezangenfolien. Dabei können die Massen in an sich üblicher Weise durch Streichen, Spritzen, Walzen, Rakeln oder Gießen, gegebenenfalls bei erhöhter Temperatur - meist im Temperaturbereich von 20 bis 150 °C - auf übliche Substrate, beispielsweise Papier, Pappe, Holz, Metalle, wie Aluminium, Kunststofffolien, wie Weich-PVC, Polyethylen, Polyamiden, Polyethylenglykolterephthalat sowie Polypropylen aufgebracht werden.

Soweit dabei Lösungsmittel mitverwendet werden, können diese von den Überzügen leicht, gegebenenfalls bei Raumtemperatur oder wenig erhöhten Temperaturen, im allgemeinen bei Temperaturen von 20 bis 150 °C und vorzugsweise bei 50 bis 80 °C abgedampft werden, wobei üblicherweise Heizstrahler oder Warmluftwälzvorrichtungen eingesetzt werden. Die gegebenfalls getrockneten oder vorgetrockneten Aufträge können anschließend durch Bestrahlen mit UV-Licht vernetzt werden, wobei gut klebende Überzüge erhalten werden, die eine hohe Kohäsion bei gleichzeitig guter Adhäsion und vorzüglicher Alterungsbeständigkeit aufweisen. Die Bestrahlung mit UV-Licht erfordert im Normalfall Keine Inertgasbedingungen und kann üblicherweise an Luft erfolgen. Als UV-Strahler können die üblichen Strahler, beispielsweise Quecksilberdampfnieder-, -mittel- oder -hochdrucklampen eingesetzt werden, welche Leistungen von 20 bis 100 J/sec x $cm^2$ haben können. Dabei ermöglichen Lampen mit höherer Leistung im allgemeinen eine schnellere Vernetzung. In manchen Fällen kann bei der vernetzenden Bestrahlung gleichzeitig durch den IR-Anteil der Lampen restliches Lösungsmittel oder Wasser entfernt werden.

Die Klebeeigenschaften von flächigen Substraten, welche eine Haftklebeschicht aufweisen, kann durch Messung der Scherfestigkeit als Maß für die Kohäsion und der Schälfestigkeit als Maß für die Oberflächenklebrigkeit erfasst werden.

Beispiele

I Herstellung der copolymerisierbaren Photoinitiatoren

I a) 4-Vinyloxybenzophenon (Photoinitiator A)

Eine Mischung aus 650 g 4-Hydroxybenzophenon (98 Gew.-%, Avocado, Research Chemicals Ltd.), 750 ml N-Methylpyrrolidon (>99 Gew.-%, BASF AG) und 60 g Zinknaphthenat (Nusa; Zinksalze der Naphthensäuren, Zinkgehalt: 12 Gew.-%) wurde unter Rühren im 2,5 1-Autoklaven vorgelegt und mit Stickstoff gespült. Nach dem Aufheizen auf 190 °C wurde zunächst mit Stickstoff auf 2 bar und dann mit Acetylen auf 20 bar aufgepresst. Abreagiertes Acetylen wurde während der Reaktion nachgeführt, so dass durchgängig ein Druck von 20 bar gehalten wurde. Nach einer Reaktionszeit von 12 Stunden ließ man auf 20 bis 25 °C (Raumtemperatur) abkühlen und entspannte auf Atmosphärendruck. Das Lösungsmittel wurde unter Vakuum bei einer Übergangstemperatur von 70 bis 80 °C und einem Druck von 1 mbar (absolut) abdestilliert. Anschließend wurden 310 g Pluriol® E 600 (Polyethylenglykol, Marke der BASF AG) zugegeben und das Produkt bei 1,2 mbar (absolut) und einer Übergangstemperatur von 163 °C durch eine Sambaydestillation gereinigt. Insgesamt wurden 522 g 4-Vinyloxybenzophenon mit einer Reinheit von 96 bis 99 Gew.-% und einem Schmelzpunkt von 58 °C erhalten.

I b) 4-Acryloxybenzophenon (Vergleichsphotoinitiator)

Die Herstellung von 4-Acryloxybenzophenon erfolgte analog der Lehre der EP-A 246848, Beispiel A.
II Herstellung der Copolymerisate

Beispiel 1

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 108,5 g | iso-Butanol (IB; 99,5 Gew.-%) |
| 50,5 g | Zulauf 1 und |
| 4,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3 Stunden und die Restmenge von Zulauf 2 während 3,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 120 °C.
Nach Ende von Zulauf 3 wurde noch eine Stunde bei 120 °C nachpolymerisiert. Anschließend wurde die Temperatur auf 100 °C abgesenkt, der Überdruck vorsichtig auf Atmosphärendruck entspannt und anschließend das Lösungsmittel und die anderen leichtsiedenden Bestandteile durch vorsichtiges Anlegen von Vakuum bis zu einem Enddruck von 10 mbar (absolut) abdestilliert. Danach wurde der Reaktionsansatz auf Raumtemperatur abgekühlt.

Zulauf 1

| | |
|---|---|
| 491,0 g | n-Butylacrylat (nBA; ≥ 99,5 Gew.-%, Fa. BASF AG) |
| 278,5 g | 2-Ethylhexylacrylat (EHA; ≥ 99,6 Gew.-%, Fa. BASF AG) |
| 189,0 g | Methylmethacrylat (MMA; ≥ 99,9 Gew.-%, Fa. BASF AG) |
| 23,0 g | Acrylsäure (AS; ≥ 99,0 Gew.-%, Fa. BASF AG) |
| 4,3 g | Photoinitiator A |

Zulauf 2

| | |
|---|---|
| 41,7 g | IB |

(fortgesetzt)

| | |
|---|---|
| 0,3 g | tert.-Butylper-2-ethylhexanoat (TBEH; ≥ 98,5 Gew.-%, Fa. Peroxid-Chemie GmbH) |

Zulauf 3

| | |
|---|---|
| 16,7 g | IB |
| 2,0 g | TBEH |

Man erhielt ein klares, hochviskoses Polymerisat mit einem Feststoffgehalt von > 99,9 Gew.-%.

Der Feststoffgehalt wurde generell bestimmt indem 1 bis 2 g des erhaltenen Polymerisats in einem Aluminiumtiegel mit einem Durchmesser von ca. 3 cm bei 140 °C und Atmosphärendruck bis zur Gewichtskonstanz erhitzt wurde. Es wurden jeweils zwei Messungen durchgeführt. Die angegebenen Werte stellen die Mittelwerte aus diesen Messungen dar. In allen folgenden Beispielen wurden ebenfalls Feststoffgehalte > 99,9 Gew.-% bestimmt.

Der K-Wert des Copolymerisats betrug 49,9.

Die K-Werte der Copolymerisate wurden generell nach H. Fikentscher, Cellulosechemie 1932 (13) Seiten 58 bis 64 und Seiten 71 bis 74 bestimmt, wobei $K = k \times 10^3$ bedeutet. Die Messungen erfolgten bei 25 °C mit einer 1 gew.-%igen Lösung der Copolymerisate in THF (entsprechend DIN ISO 1628-1).

Vergleichsbeispiel 1

Das Vergleichsbeispiel 1 erfolgte analog Beispiel 1 mit der Ausnahme, dass anstelle des Photoinitiators A die gleiche Menge des Vergleichsphotoinitiators eingesetzt wurde. Der gemessene K-Wert betrug 50,5.

Beispiel 2

Beispiel 2 erfolgte analog Beispiel 1 mit der Ausnahme, das anstelle von IB Methylethylketon (MEK; ≥ 99,0 Gew.-%, Deutsche Shell Chemie GmbH) verwendet wurde. Es wurde ein K-Wert von 50,8 gemessen.

Vergleichsbeispiel 2

Das Vergleichsbeispiel 2 erfolgte analog Beispiel 2 mit der Ausnahme, dass anstelle des Photoinitiators A die gleiche Menge des Vergleichsphotoinitiators eingesetzt wurde. Der gemessene K-Wert betrug 50,2.

Beispiel 3

Beispiel 3 erfolgte analog Beispiel 1 mit der Ausnahme, dass in den Zuläufen 2 und 3 anstelle von TBEH 2,2'-Azobis-2-methyl-butyronitril (Wako V59, WAKO Chemicals GmbH) eingesetzt wurden. Der gemessene K-Wert betrug 51,2.

Beispiel 4

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 110,5 g | IB |
| 52,5 g | Zulauf 1 und |
| 4,0 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3 Stunden und die Restmenge von Zulauf 2 während 3,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 120 °C.

Nach Ende von Zulauf 3 wurde noch eine Stunde bei 120 °C nachpolymerisiert. Anschließend wurde die

Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 48,8 bestimmt.

Zulauf 1

| | |
|---|---|
| 422,0 g | nBA |
| 347,5 g | EHA |
| 189,0 g | MMA |
| 25,0 g | AS |
| 4,3 g | Photoinitiator A |

Zulauf 2

| | |
|---|---|
| 41,7 g | IB |
| 0,4 g | TBEH |

Zulauf 3

| | |
|---|---|
| 16,7 g | IB |
| 2,4 g | TBEH |

Beispiel 5

Beispiel 5 erfolgte analog Beispiel 4 mit der Ausnahme, dass anstelle von IB MEK; verwendet wurde. Es wurde ein K-Wert von 50,7 gemessen.

Beispiel 6

Beispiel 6 erfolgte analog Beispiel 4 mit der Ausnahme, dass 5,0 g Photoinitiator A eingesetzt wurden. Der gemessene K-Wert betrug 48,3.

Beispiel 7

Beispiel 7 erfolgte analog Beispiel 4 mit der Ausnahme, dass 3,6 g Photoinitiator A eingesetzt wurden. Der gemessene K-Wert betrug 48,3.

Beispiel 8

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 115,0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf

2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 49,7 bestimmt.

Zulauf 1

| | |
|---|---|
| 1117,0 | g nBA |
| 59,1 | g AS |
| 4,3 | g Photoinitiator A |

Zulauf 2

| | |
|---|---|
| 65, 8 g | IB |
| 1,3 g | TBEH |

Zulauf 3

| | |
|---|---|
| 19,7 g | IB |
| 2,6 g | TBEH |

Beispiel 9

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 115,0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf 2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 51,9 bestimmt.

Zulauf 1

| | |
|---|---|
| 1100,0 g | nBA |
| 55,1 g | AS |

(fortgesetzt)

| | |
|---|---|
| 22,0 g | Maleinsäureanhydrid (MSA; > 99,7 Gew.-%, Fa. Lonza S.P.A.) |
| 4,3 g | Photoinitiator A |

Zulauf 2

| | |
|---|---|
| 65,8 g | IB |
| 1,3 g | TBEH |

Zulauf 3

| | |
|---|---|
| 19,7 g | IB |
| 2,6 g | TBEH |

Beispiel 10

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 115,0 g | IB |
| 59,5 g | Zulauf 1 und |
| 3,3 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 3,5 Stunden und die Restmenge von Zulauf 2 während 4 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115°C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 50,1 bestimmt.

Zulauf 1

| | |
|---|---|
| 1043,0 g | nBA |
| 133,1 g | AS |
| 10,0 g | Photoinitiator A |

Zulauf 2

| | |
|---|---|
| 65,0 g | IB |
| 1,7 g | TBEH |

Zulauf 3

| | |
|---|---|
| 19,9 g | IB |
| 2,6 g | TBEH |

Beispiel 11

Beispiel 11 wurde analog Beispiel 10 hergestellt mit der Ausnahme, dass folgende Zuläufe verwendet wurden:

Zulauf 1

| | |
|---|---|
| 1000,0 g | nBA |
| 105,1 g | AS |
| 72,0 g | MSA |
| 5,8 g | Photoinitiator A |

Zulauf 2

| | |
|---|---|
| 68,4 g | IB |
| 1,7 g | TBEH |

Zulauf 3

| | |
|---|---|
| 19,7 g | IB |
| 2,8 g | TBEH |

Es wurde ein K-Wert von 50,2 bestimmt.

Beispiel 12

In einem heiz- und kühlbaren 2 1-Glasreaktor, ausgerüstet mit einem Ankerrührer, Rückflußkühler, Evakuier- und Dosiervorrichtungen wurden bei Raumtemperatur unter Stickstoffatmosphäre

| | |
|---|---|
| 110,0 g | IB |
| 59,0 g | Zulauf 1 und |
| 2,5 g | Zulauf 2 |

vorgelegt und bei geschlossener Apparatur ohne Druckausgleich unter Rühren auf 100 °C aufgeheizt. Zeitgleich beginnend wurde bei dieser Temperatur die Restmenge von Zulauf 1 während 4 Stunden und die Restmenge von Zulauf 2 während 4,5 Stunden zudosiert. 15 Minuten nach Beendigung von Zulauf 2 wurde mit Zulauf 3 begonnen, der innerhalb von 15 Minuten zudosiert wurde. Gleichzeitig mit der Dosierung von Zulauf 3 erhöhte man die Temperatur auf 115 °C.

Nach Ende von Zulauf 3 wurde noch zwei Stunden bei 115 °C nachpolymerisiert. Anschließend wurde die Temperatur auf 100 °C abgesenkt, der Überdruck vorsichtig auf Atmosphärendruck entspannt und danach das Lösungsmittel und die anderen leichtsiedende Bestandteile durch vorsichtiges Anlegen von Vakuum bis zu einem Enddruck von 10 mbar (absolut) abdestilliert. Danach wurde auf Raumtemperatur abgekühlt. Man erhielt ein klares, hochviskoses Polymerisat mit einem Feststoffgehalt von > 99,9 Gew.-%. Der K-Wert wurde zu 49,0 bestimmt.

Zulauf 1

| | |
|---|---|
| 910,0 g | EHA |
| 91,0 g | 2-Hydroxyethylacrylat (≥ 98,5 Gew.-%, Fa. BASF AG) |
| 10,5 g | Photoinitiator A |

Zulauf 2

| | |
|---|---|
| 35,8 g | IB |
| 0,8 g | TBEH |

Zulauf 3

| | |
|---|---|
| 21,7 g | IB |
| 2 , 8 g | TBEH |

III Anwendungstechnische Prüfungen

Die in den Beispielen 1 bis 12 hergestellten Copolymerisate wurden anwendungstechnisch auf deren Haftklebstoffeigenschaften untersucht. Dabei wurde wie folgt vorgegangen:

a) Herstellung der Prüfstreifen

Das zu prüfende Copolymerisat wurde ohne Zusatz von Tackifiern untersucht. Dazu wurde das Copolymerisat auf einem beheizbaren Streichtisch bei 85 bis 120 °C mit einem Rakel in dünner Schicht auf eine handelsubliche Polyesterfolie (Hostaphanfolie RN 36) aufgetragen und anschließend auf Raumtemperatur abgekühlt. Die Spalthöhe des Rakel wurde dabei so gewählt, dass sich für das Copolymerisat eine Auftragsmenge von 19 bis 21 g/$m^2$ ergab. Die Bestrahlung erfolgte mit einem CK-Strahler der Fa. IST-Strahlentechnik Metz GmbH, welcher eine Leistung von 75 mJ/sec x $cm^2$ aufwies. Dazu wurde die beschichtete Folie auf ein laufendes Endlosband gelegt, so dass die beschichtete Folie in einem Abstand von 10 cm mit einer Geschwindigkeit von 58 m/min unter der Lampe hindurchlief. Die Bestrahlung erfolgte unter Luft. Die so hergestellten Folien wurden in 2,5 cm breite und 25 cm lange Streifen geschnitten.

b) Prüfung der Scherfestigkeit (in Anlehnung an FINAT FTM 7)

Der jeweilige Prüfstreifen wurde so auf den Rand eines Prüfblechs aus Edelstahl verklebt, dass eine Verklebungsfläche von 12,5 x 12,5 $mm^2$ resultierte. 10 Minuten nach dem Verkleben wurde dann am überstehenden Ende der Folie ein 1000 g-Gewicht befestigt und das Prüfblech senkrecht in einem Raum mit einer Temperatur von konstant 23 °C und einer relativen Luftfeuchtigkeit von 50 % aufgehängt. Die Zeit bis zum Reißen der Verklebung unter Einfluss des Gewichts ist ein Maß für die Scherfestigkeit, welche wiederum ein Maß für die Kohäsion darstellt. Diese ist umso größer, je länger die Zeitperiode bis zum Reißen der Verklebung ist. Pro Polymerisat wurden drei unabhängige Bestimmungen durchgeführt. Die in Tabelle 1 angegebenen Werte stellen Mittelwerte aus diesen drei Bestimmungen dar.

c) Prüfung der Schälfestigkeit (in Anlehnung an FINAT FTM 1)

Einen Prüfstreifen klebte man bei 23 °C und 50 % relative Luftfeuchtigkeit auf ein Edelstahlprüfblech.

Nach Ablauf einer vorgegebenen Kontaktzeit von 24 Stunden wurde der Streifen mit Hilfe einer Zugprüfmaschine in einem Winkel von 180° mit einer Geschwindigkeit von 300 mm pro Minute vom Prüfblech abgezogen. Die hierfür erforderliche Kraft ist ein Maß für die Adhäsion. Sie wird als Schälfestigkeit bezeichnet und in Newton pro 2,5 cm (N/2,5 cm) angegeben. Die Adhäsion ist umso höher, je höher der Wert für die Schälfestigkeit nach der angegebenen Zeit ist. Pro Polymerisat wurden jeweils drei unabhängige Bestimmungen durchgeführt. Die in Tabelle 1 angegebenen

Werte stellen Mittelwerte aus diesen drei Bestimmungen dar.

Tabelle 1: Zusammenfassende Darstellung der Scherfestigkeit und der Schälfestigkeit der aus den Beispielen 1 bis 12 erhaltenen Copolymerisate

| Polymerisat aus Beispiel | Scherfestigkeit in Minuten | Schälfestigkeit in N/2,5 cm nach 24 Stunden |
|---|---|---|
| 1 | 125 | 12,2 |
| Vergleich 1 | 109 | 9,7 |
| 2 | 122 | 11,8 |
| Vergleich 2 | 107 | 9,3 |
| 3 | 130 | 10,9 |
| 4 | 150 | 11,9 |
| 5 | 151 | 12,0 |
| 6 | 146 | 12,3 |
| 7 | 156 | 12,4 |
| 8 | 124 | 13,1 |
| 9 | 116 | 12,2 |
| 10 | 130 | 10,8 |
| 11 | 138 | 9,9 |
| 12 | 123 | 10,9 |

Wie aus Tabelle 1 klar ersichtlich ist, weisen die erfindungsgemäßen Schmelzhaftklebstoffe, im Vergleich zu einem Haftklebstoff, bei dessen Herstellung ein nichterfingungsgemässer Photoinitiator eingesetzt wurde, deutlich höhere Scherfestigkeiten (Kohäsion) auf. Ebenfalls stark verbessert sind die nach 24 Stunden erhaltenen Schälfestigkeiten (Adhäsion).

IV Stabilitätsprüfung

Zur Prüfung der Hydrolysestabilität wurden von erfindungsgemäßen und nichterfindungsgemäßen Copolymerisaten 70 gew.-%ige Lösungen in IB hergestellt und diese bei 115 °C in einem geschlossenen Gefäß unter Stickstoffatmosphäre gerührt. Nach 36 und nach 72 Stunden wurden aus diesen Lösungen Proben entnommen und die Scherfestigkeiten der Polymerfilme, wie unter vorherigem Abschnitt III beschrieben, bestimmt. Die entsprechenden Ergebnisse sind in Tabelle 2 aufgelistet.

Tabelle 2: Scherfestigkeiten als Maß für die Hydrolysebeständigkeit

| Polymerisat aus Beispiel | Rührdauer in Stunden | Scherfestigkeit in Minuten |
|---|---|---|
| 1 | 0<br>36<br>72 | 125<br>124<br>119 |
| Vergleich 1 | 0<br>36<br>72 | 109<br>12<br>1 |
| 2 | 0<br>36<br>72 | 122<br>120<br>118 |
| Vergleich 2 | 0<br>36 | 107<br>29 |

(fortgesetzt)

| Polymerisat aus Beispiel | Rührdauer in Stunden | Scherfestigkeit in Minuten |
|---|---|---|
| | 72 | 18 |

Wie aus Tabelle 2 ersichtlich ist, weisen die erfindungsgemäßen Schmelzhaftklebstoffe, im Vergleich zu einem Haftklebstoff, bei dessen Herstellung ein nichterfingungsgemäßer Photoinitiator eingesetzt wurde, eine deutlich höhere Hydrolysebeständigkeit auf.

## Patentansprüche

**1.** Verwendung von Aceto- oder Benzophenonderivaten der allgemeinen Formel I,

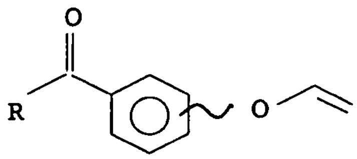

(I),

worin

R gegebenenfalls substituiertes
$C_1$- bis $C_3$-Alkyl,
$C_6$- bis $C_{10}$-Aryl oder
Aralkyl mit 6 bis 10 C-Atomen im Arylteil und 1 bis 6 C-Atomen im Alkylteil

bedeutet, als copolymerisierbare Photoinitiatoren.

**2.** Copolymerisate, erhalten durch radikalische Polymerisation einer Mischung von ethylenisch ungesättigten Verbindungen, enthaltend 0,01 bis 10 Gew.-% an Aceto- oder Benzophenonderivaten der allgemeinen Formel I,

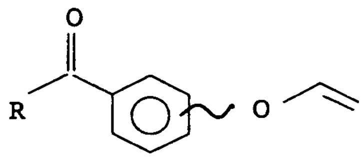

(I),

worin

R gegebenenfalls substituiertes
$C_1$- bis $C_3$-Alkyl,
$C_6$- bis $C_{10}$-Aryl oder
Aralkyl mit 6 bis 10 C-Atomen im Arylteil und 1 bis 6 C- Atomen im Alkylteil

bedeutet.

**3.** Verfahren zur Herstellung von Copolymerisaten, **dadurch gekennzeichnet, dass** ein Gemisch ethylenisch ungesättigter Verbindungen (Monomere), welches 0,01 bis 10 Gew.-% an Aceto- oder Benzophenonderivaten der allgemeinen Formel I,

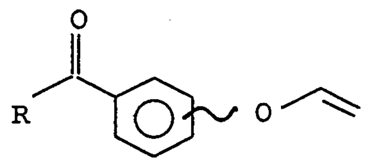

(I),

worin

R gegebenenfalls substituiertes
$C_1$- bis $C_3$-Alkyl,
$C_6$- bis $C_{10}$-Aryl oder
Aralkyl mit 6 bis 10 C-Atomen im Arylteil und 1 bis 6 C- Atomen im Alkylteil

bedeutet, enthält, polymerisiert wird.

4. Verfahren nach Anspruch 3, **dadurch gekennzeichnet, dass** die Polymerisation radikalisch initiiert wird.

5. Verfahren nach Anspruch 4, **dadurch gekennzeichnet, dass** die Polymerisation in Form einer Lösungspolymerisation erfolgt.

6. Copolymerisate, erhältlich nach einem Verfahren gemäß einem der Ansprüche 3 bis 5.

7. Copolymerisate nach einem der Ansprüche 2 oder 6 mit einer Glasübergangstemperatur von -70 bis +150 °C.

8. Verwendung der Copolymerisate gemäß einem der Ansprüche 2, 6 oder 7 als UV-härtbare Bindemittel oder Klebstoffe.

9. Verwendung nach Anspruch 8 als Haftklebstoff.

## Claims

1. The use of acetophenone or benzophenone derivatives of the formula I,

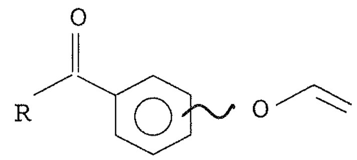

(I),

where

R is optionally substituted
$C_1$ to $C_3$ alkyl,
$C_6$ to $C_{10}$ aryl or
aralkyl having from 6 to 10 carbon atoms in the aryl moiety and from 1 to 6 carbon atoms in the alkyl moiety

as copolymerizable photoinitiators.

2. A copolymer obtained by free-radical polymerization of a mixture of ethylenically unsaturated compounds, comprising from 0.01 to 10% by weight of acetophenone or benzophenone derivatives of the formula I,

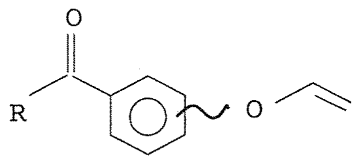

(I),

where

R is optionally substituted
$C_1$ to $C_3$ alkyl,
$C_6$ to $C_{10}$ aryl or
aralkyl having from 6 to 10 carbon atoms in the aryl moiety and from 1 to 6 carbon atoms in the alkyl moiety.

**3.** A process for preparing a copolymer, which comprises polymerizing a mixture of ethylenically unsaturated compounds (monomers) comprising from 0.01 to 10% by weight of acetophenone or benzophenone derivatives of the formula I,

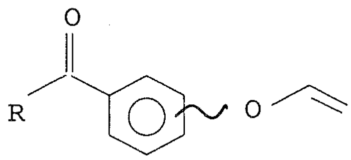

(I),

where

R is optionally substituted
$C_1$ to $C_3$ alkyl,
$C_6$ to $C_{10}$ aryl or
aralkyl having from 6 to 10 carbon atoms in the aryl moiety and from 1 to 6 carbon atoms in the alkyl moiety.

**4.** The process according to claim 3, wherein the polymerization is free-radically initiated.

**5.** The process according to claim 4, wherein the polymerization takes place in the form of a solution polymerization.

**6.** A copolymer obtainable by a process according to any of claims 3 to 5.

**7.** The copolymer according to either of claims 2 and 6, having a glass transition temperature of from -70 to +150°C.

**8.** The use of the copolymer according to any of claims 2, 6, and 7 as a UV-curable binder or adhesive.

**9.** The use according to claim 8 as a pressure sensitive adhesive.

### Revendications

**1.** Utilisation de dérivés d'acétophénone ou de benzophénone de formule générale I,

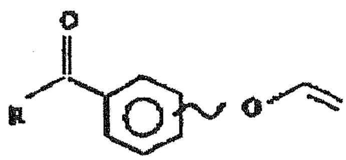

(I),

dans laquelle

R représente un radical alkyle en $C_1$ à $C_3$, aryle en $C_6$ à $C_{10}$ ou aralkyle comportant de 6 à 10 atomes de C dans la partie aryle et de 1 à 6 atomes de C dans la partie alkyle, éventuellement substitués,

en tant que photoamorceurs copolymérisables.

2. Copolymères obtenus par polymérisation radicalaire d'un mélange de composés éthyléniquement insaturés, contenant de 0,01 à 10% en poids de dérivés d'acétophénone ou de benzophénone de formule générale I,

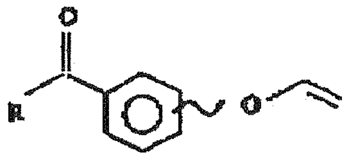

(I),

dans laquelle

R représente un radical alkyle en $C_1$ à $C_3$, aryle en $C_6$ à $C_{10}$ ou aralkyle comportant de 6 à 10 atomes de C dans la partie aryle et de 1 à 6 atomes de C dans la partie alkyle, éventuellement substitués.

3. Procédé de préparation de copolymères, **caractérisé en ce que** l'on polymérise un mélange de composés éthyléniquement insaturés (monomères), contenant de 0,01 à 10% en poids de dérivés d'acétophénone ou de benzophénone de formule générale I,

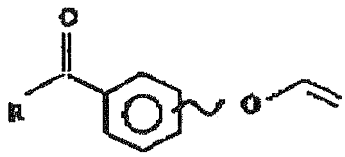

(I),

dans laquelle

R représente un radical alkyle en $C_1$ à $C_3$, aryle en $C_6$ à $C_{10}$ ou aralkyle comportant de 6 à 10 atomes de C dans la partie aryle et de 1 à 6 atomes de C dans la partie alkyle, éventuellement substitués.

4. Procédé suivant la revendication 3, **caractérisé en ce que** la polymérisation est amorcée par voie radicalaire.

5. Procédé suivant la revendication 4, **caractérisé en ce que** la polymérisation se fait sous la forme d'une polymérisation en solution.

6. Copolymères que l'on peut obtenir par un procédé suivant l'une quelconque des revendications 3 à 5.

7. Copolymères suivant l'une quelconque des revendications 2 ou 6 ayant une température de transition vitreuse de -70°C à 150°C.

8. Utilisation des copolymères suivant l'une quelconque des revendications 2, 6 ou 7 en tant que liants durcissables aux UV ou adhésifs.

9. Utilisation suivant la revendication 8 en tant qu'adhésifs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2411169 A
- EP 346788 A
- EP 377199 A
- EP 246848 A
- US 4042768 A
- WO 9533775 A
- EP 767180 A
- DE 19743759 A


### In der Beschreibung aufgeführte Nicht-Patentliteratur


- **J. BRANDRUP ; E.H. IMMERGUT.** Polymer Handbook. J. Wiley, 1966